# EUROPEAN PATENT APPLICATION

(11) **EP 4 750 042 A1**
(43) Date of publication of application: **27.05.2026**
(21) Application number: 25802719.2
(22) Date of filing: 30.04.2025
(51) Int. Cl.: H04M 1/02, H04M 1/03, H04R 9/02, H04R 9/06, H04R 9/04, G06F 3/16, G06F 1/16, G09F 9/30

(54) **ELECTRONIC DEVICE**

(30) Priority: 14.05.2024 CN 202410600761
(71) Applicant: HUAWEI TECHNOLOGIES CO., LTD., Shenzhen 518129 (CN)
(72) Inventor: DONG, Yongkang, Shenzhen, Guangdong 518129 (CN); LIU, Zhoupeng, Shenzhen, Guangdong 518129 (CN); QIN, Renxuan, Shenzhen, Guangdong 518129 (CN); HUANG, Zhen, Shenzhen, Guangdong 518129 (CN); FENG, Jianhua, Shenzhen, Guangdong 518129 (CN)
(74) Representative: Körber, Martin Hans
(86) International application number: PCT/CN2025/092667
(87) International publication number: WO 2025/237096

(57) **Abstract**

This application provides an electronic device. The electronic device includes a first housing, a second housing, a first folding mechanism, a speaker, and a first sensor. The first folding mechanism is connected to the first housing and the second housing, the first housing and the second housing are unfolded or folded relative to each other by using the first folding mechanism, the first sensor is mounted on the first housing, and the speaker is mounted on the second housing. The speaker includes a magnetic member, and the first sensor is configured to detect magnetic field strength of the magnetic member, to detect an opening angle of the second housing relative to the first housing based on the magnetic field strength. The magnetic member of the speaker is reused as a magnet for detecting the opening angle of the second housing relative to the first housing, and no additional magnet needs to be disposed. This helps release a part of internal space of the electronic device, the released space may be used to accommodate more electronic components, and utilization of the internal space of the electronic device is high.

## Description

This application claims priority to Chinese Patent Application No. 202410600761.4, filed with the China National Intellectual Property Administration on May 14, 2024, and entitled "ELECTRONIC DEVICE", which is incorporated herein by reference in its entirety.

### TECHNICAL FIELD

This application relates to the field of foldable electronic device technologies, and in particular, to an electronic device.

### BACKGROUND

Foldable smart hardware is an important trend in the current consumer electronics industry. A foldable electronic device causes discomfort because of an increased thickness, and results in poor terminal experience. Therefore, to ensure a comfortable thickness after folding, a thickness and a width of the foldable electronic device are limited. Consequently, internal space of the electronic device is limited, failing to accommodate a large quantity of electronic components.

### SUMMARY

This application provides an electronic device with high utilization of internal space.

According to a first aspect, an embodiment of this application provides an electronic device. The electronic device includes a first housing, a second housing, a first folding mechanism, a speaker, and a first sensor. The first folding mechanism is connected to the first housing and the second housing, the first housing and the second housing are unfolded or folded relative to each other by using the first folding mechanism, the first sensor is mounted on the first housing, and the speaker is mounted on the second housing. The speaker includes a magnetic member, and the first sensor is configured to detect magnetic field strength of the magnetic member, to detect an opening angle of the second housing relative to the first housing based on the magnetic field strength.

It may be understood that, the magnetic member of the speaker is reused as a magnet for detecting the opening angle of the second housing relative to the first housing, and the opening angle of the second housing relative to the first housing can be detected without a need to additionally dispose a magnet for cooperation with the first sensor. This helps release a part of internal space of the electronic device, the released space may be used to accommodate more electronic components, and utilization of the internal space of the electronic device is high.

In some possible implementations, when the electronic device is in a closed state, the first sensor and the magnetic member are disposed opposite to each other.

It may be understood that, that the first sensor and the magnetic member may be disposed opposite to each other means that a projection of the first sensor on a reference plane and a projection of the magnetic member on the reference plane at least partially overlap in a thickness direction of the electronic device. The reference plane is perpendicular to the thickness direction of the electronic device. The magnetic member has a large amount of magnetic leakage in a Z-axis direction, and the first sensor and the magnetic member are disposed opposite to each other, so that magnetic field strength detected by the first sensor is high, and detection precision is high.

In some possible implementations, the speaker includes a frame, a diaphragm, a voice coil, and a magnetic circuit system, and the frame and the diaphragm are arranged in the thickness direction of the electronic device. A peripheral edge of the diaphragm is fastened to the frame, the magnetic circuit system is fastened to the frame, one end of the voice coil is fastened to a side that is of the diaphragm and that faces the magnetic circuit system, and the other end is located in a magnetic gap of the magnetic circuit system. The magnetic circuit system includes the magnetic member.

It may be understood that, the magnetic circuit system may not only be used in cooperation with the voice coil to enable the speaker to make a sound, but also be used in cooperation with the first sensor to detect the opening angle of the second housing relative to the first housing. The magnetic circuit system is reused as a magnet for detecting the opening angle of the second housing relative to the first housing, and no magnet needs to be additionally disposed for cooperation with the first sensor.

In some possible implementations, the magnetic circuit system includes a central magnet and an edge magnet, the edge magnet surrounds the central magnet and is spaced apart from the central magnet, and the central magnet and the edge magnet enclose the magnetic gap. The central magnet is the magnetic member.

It may be understood that a location of the central magnet is approximately at a center of the magnetic circuit system. When the electronic device is in the closed state, the first sensor and the central magnet are further disposed opposite to each other, so that magnetic field strength detected by the first sensor is high, and detection precision is high.

In some possible implementations, when the electronic device is in the closed state, the magnetic circuit system is located on a side that is of the diaphragm and that is close to the first housing.

It may be understood that, compared with a case in which when the electronic device is in the closed state, the magnetic circuit system may be located on a side that is of the diaphragm and that is away from the first housing, in this embodiment, a distance between the magnetic circuit system and the first housing is shorter, a distance between the magnetic member and the first sensor is shorter, and the magnetic field strength of the magnetic member detected by the first sensor may be higher. This helps improve detection precision.

In some possible implementations, the speaker further includes a magnetic conductive sheet, the magnetic conductive sheet is fastened to the frame, and the magnetic conductive sheet is disposed opposite to the magnetic circuit system. When the electronic device is in the closed state, the first sensor and the magnetic conductive sheet are disposed opposite to each other.

It may be understood that, the magnetic conductive sheet may be used to enhance a magnetic field of the magnetic circuit system, to improve magnetic field strength in the magnetic gap. Compared with a solution in which no magnetic conductive sheet is disposed, in this embodiment, a smaller current is required when the voice coil moves by same displacement.

In some possible implementations, the electronic device further includes a first magnetic attracting member and a second magnetic attracting member, the first magnetic attracting member is mounted on the first housing, and the second magnetic attracting member is mounted on the second housing. When the electronic device is in the closed state, the first magnetic attracting member and the second magnetic attracting member are disposed opposite to each other.

It may be understood that there may be attraction between the first magnetic attracting member and the second magnetic attracting member. When the electronic device is in the closed state, the attraction between the first magnetic attracting member and the second magnetic attracting member can enable the first housing and the second housing to close reliably.

In some possible implementations, the second magnetic attracting member and the speaker are stacked in the thickness direction of the electronic device.

It may be understood that, the second magnetic attracting member and the speaker are stacked, so that an area that is on an X-Y plane in the second housing and that is originally used to mount the second magnetic attracting member can be saved, and the area can be used to mount more electronic components. For example, the saved area that is originally used to mount the second magnetic attracting member can be used to increase a volume of a rear cavity of the speaker, to improve sound-making performance of the speaker.

In some possible implementations, when the electronic device is in the closed state, the second magnetic attracting member is fastened to a side that is of the speaker and that is close to the first housing.

It may be understood that, compared with a solution in which the speaker and the second magnetic attracting member are stacked on the X-Y plane, disposing the second magnetic attracting member on the side that is of the speaker and that is away from the second housing reduces a distance between the second magnetic attracting member and the first magnetic attracting member, and improves the attraction between the first magnetic attracting member and the second magnetic attracting member when the electronic device is in the closed state. This facilitates closure reliability of the electronic device. In addition, compared with the solution in which the speaker and the second magnetic attracting member are stacked on the X-Y plane, in this embodiment, when the electronic device is in the closed state, the distance between the second magnetic attracting member and the first magnetic attracting member is smaller. When the attraction between the second magnetic attracting member and the first magnetic attracting member remains unchanged, a volume of the second magnetic attracting member in this implementation may be smaller. This helps reduce mass of the electronic device.

In some possible implementations, the electronic device further includes a magnetic isolation sheet, and the magnetic isolation sheet is fastened to the speaker and located between the second magnetic attracting member and the magnetic member.

It may be understood that, disposing the magnetic isolation sheet can reduce impact of the second magnetic attracting member on the magnetic member, and can reduce interference of the second magnetic attracting member on working of the speaker.

In some possible implementations, a housing of the speaker is provided with a mounting slot, an opening of the mounting slot is located on an outer surface of the housing of the speaker, and the second magnetic attracting member is fastened in the mounting slot.

It may be understood that the mounting slot is provided, so that the second magnetic attracting member is mounted in the mounting slot, and a location of the second magnetic attracting member can be fixed, to reduce a risk of displacement of the speaker due to an external force, and keep the attraction between the first magnetic attracting member and the second magnetic attracting member within a large range.

In some possible implementations, the housing of the speaker includes a first sub-housing and a second sub-housing, the first sub-housing and the second sub-housing are arranged in the thickness direction of the electronic device, the first sub-housing is connected to the second sub-housing, to enclose accommodating space, and at least a part of a core of the speaker is located in the accommodating space. The opening of the mounting slot is located on a surface that is of the accommodating space and that faces away from the first sub-housing.

It may be understood that the housing of the speaker includes two mechanical parts: the first sub-housing and the second sub-housing, and the first sub-housing and the second sub-housing cooperate to enclose the accommodating space. At least a part of the core of the speaker may be located in the accommodating space. The housing is easy to disassemble, and difficulty of assembling the core and the housing is low.

In some possible implementations, the electronic device further includes a third housing and a second folding mechanism, the second folding mechanism is connected to the second housing and the third housing, and the second housing and the third housing are unfolded or folded relative to each other by using the second folding mechanism. The electronic device further includes a second sensor, the second sensor is mounted on the third housing, and the second sensor is configured to detect magnetic field strength of the magnetic member, to detect an opening angle of the third housing relative to the second housing based on the magnetic field strength.

It may be understood that the magnetic field of the magnetic member of the speaker may be reused, the second sensor detects the magnetic field strength of the magnetic member, and the electronic device may detect the opening angle of the third housing relative to the second housing based on the magnetic field strength. In a multi-fold electronic device, a quantity of sensors may be adjusted based on a quantity of housings of the electronic device, to detect an opening angle between two adjacent housings.

In some possible implementations, the electronic device further includes a third housing and a second folding mechanism, the second folding mechanism is connected to the second housing and the third housing, and the second housing and the third housing are unfolded or folded relative to each other by using the second folding mechanism. The electronic device further includes a third magnetic attracting member, and the third magnetic attracting member is mounted on the third housing. When the electronic device is in the closed state, the first magnetic attracting member and the second magnetic attracting member are disposed opposite to each other.

It may be understood that there may be attraction between the third magnetic attracting member and the second magnetic attracting member or between the third magnetic attracting member and the first magnetic attracting member. When the electronic device is in the closed state, the attraction between the third magnetic attracting member and the first magnetic attracting member/the second magnetic attracting member can enable the third housing and the second housing to close reliably.

### BRIEF DESCRIPTION OF DRAWINGS

To describe technical solutions in embodiments of this application, the following describes accompanying drawings used in embodiments of this application.
FIG. 1 is a diagram of a structure of an electronic device in an open state according to an embodiment of this application;
FIG. 2 is a diagram of an implementation of the electronic device shown in FIG. 1 in a closed state;
FIG. 3 is an exploded diagram of an implementation of the electronic device shown in FIG. 1;
FIG. 4 is a diagram of a structure of an implementation of a speaker shown in FIG. 3;
FIG. 5 is a sectional view of an implementation of the speaker shown in FIG. 4 along a section line A-A;
FIG. 6 is a partial exploded diagram of an implementation of the speaker shown in FIG. 4;
FIG. 7 is an exploded diagram of an implementation of a core shown in FIG. 6;
FIG. 8 is a sectional view of an implementation of the core shown in FIG. 6 along a section line B-B;
FIG. 9 is a partial sectional view of an implementation of the electronic device shown in FIG. 2 along a section line C-C;
FIG. 10 is a diagram of a structure of an implementation of a first magnetic attracting member shown in FIG. 3;
FIG. 11 is an assembly diagram of an implementation of a speaker and a second magnetic attracting member shown in FIG. 3;
FIG. 12 is a partial sectional view of another implementation of the electronic device shown in FIG. 2 along a section line C-C;
FIG. 13 is a diagram of a structure of another implementation of an electronic device in an open state according to an embodiment of this application;
FIG. 14 is a diagram of a structure of the electronic device shown in FIG. 13 in a closed state;
FIG. 15 is an exploded diagram of an implementation of the electronic device shown in FIG. 13; and
FIG. 16 is a diagram of a structure of an implementation of the electronic device shown in FIG. 14 along a section line D-D.

### DESCRIPTION OF EMBODIMENTS

The following describes embodiments of this application with reference to the accompanying drawings in embodiments of this application. Embodiments described with reference to the accompanying drawings in this specification are examples, and are intended to explain this application, but cannot be understood as a limitation on this application.

In the descriptions of embodiments of this application, it should be noted that terms "installation" and "connection" should be understood in a broad sense unless there is a clear stipulation and limitation. For example, "connection" may be a detachable connection, a nondetachable connection, a direct connection, or an indirect connection through an intermediate medium. It should be understood that, in this application, an "electrical connection" may be understood as physical contact and electrical conduction of elements. It may also be understood as a form in which different elements in a line structure are connected through physical lines that can transmit an electrical signal, such as a printed circuit board (printed circuit board, PCB) copper foil or a conducting wire. Both "connected" and "connection" may refer to a mechanical connection relationship or a physical connection relationship. For example, A is connected to B or a connection between A and B may mean that there is a fastening component (for example, a screw, a bolt, or a nail) between A and B, or A and B are in contact with each other and A and B are difficult to be separated.

In addition, "fastening" in this specification should also be understood in a broad sense. For example, "fastening" may be direct fastening or indirect fastening through an intermediate medium. The term "fastening" means that two objects are connected to each other and a relative location relationship remains unchanged after the connection. The orientation terms mentioned in embodiments of this application, for example, "upper" and "lower", are merely directions with reference to the accompanying drawings. Therefore, the orientation terms are used to better and more clearly describe and understand embodiments of this application, rather than indicating or implying that an indicated apparatus or element needs to have a specific orientation or be constructed and operated in the specific orientation, and therefore cannot be construed as a limitation on embodiments of this application. "A plurality of" means two or more than two.

In the descriptions of embodiments of this application, unless otherwise specified, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In addition, in the descriptions of embodiments of this application, "a plurality of" means two or more.

In embodiments of this application, the terms "first", "second", "third", and "fourth" are merely intended for a purpose of description, and shall not be understood as an indication or implication of relative importance or an implicit indication of a quantity of indicated technical features. Therefore, a feature defined by "first", "second", "third", or "fourth" may explicitly or implicitly include one or more features.

In addition, limitations on relative location relationships, for example, being parallel, perpendicular, or aligned, are mentioned in embodiments of this application. These limitations are all defined based on a current technique level, but are not absolutely strict limitations. A small deviation is allowed, and being approximately parallel, approximately perpendicular, approximately aligned, or the like is allowed. For example, that A is parallel to B means that A is parallel or approximately parallel to B, and an included angle of 0 degrees (°) to 10 degrees between A and B is allowed. For example, that A is perpendicular to B means that A is perpendicular or approximately perpendicular to B, and an included angle of 80 degrees to 100 degrees between A and B is allowed.

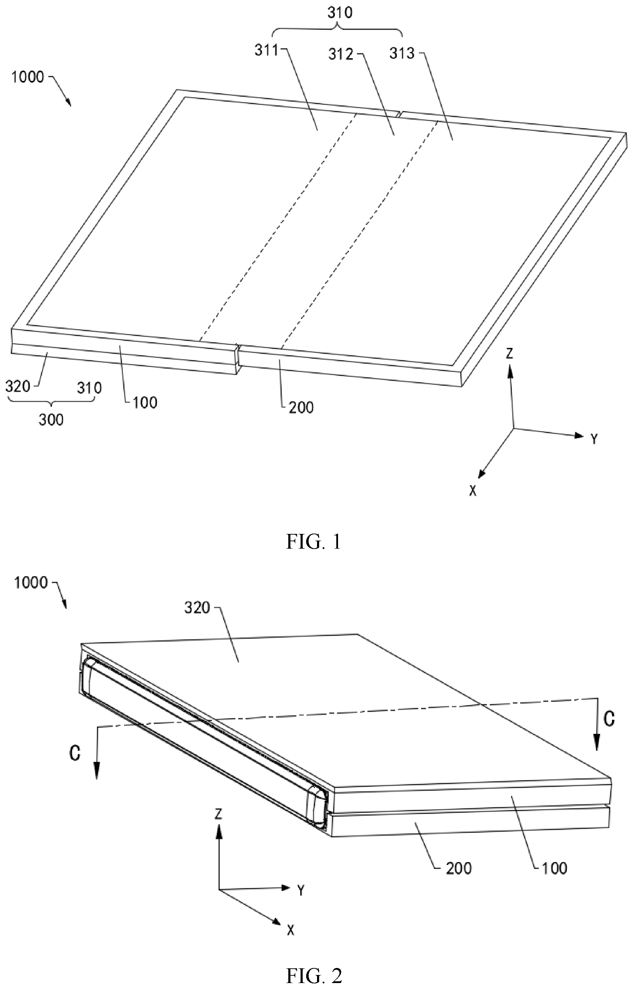

FIG. 1 is a diagram of a structure of an electronic device 1000 in an open state according to an embodiment of this application. It should be noted that the figure merely shows some components included in the electronic device 1000 as an example, and actual sizes, actual locations, and actual structures of these components are not limited by the figure. The following accompanying drawings also merely show some components as an example, and actual sizes, actual locations, and actual structures of these components are not limited by the following accompanying drawings. Details are not described below again.

The electronic device 1000 may be a device with a folding function, for example, a mobile phone, a tablet computer, a personal computer, a notebook computer, a vehicle-mounted device, or a wearable device. In the embodiment shown in FIG. 1, an example in which the electronic device 1000 is a foldable mobile phone is used for description. For ease of description, as shown in FIG. 1, a width direction of the electronic device 1000 is defined as an X axis. A length direction of the electronic device 1000 is a Y axis. A thickness direction of the electronic device 1000 is a Z axis. In another implementation, a coordinate system may also be flexibly set according to another requirement.

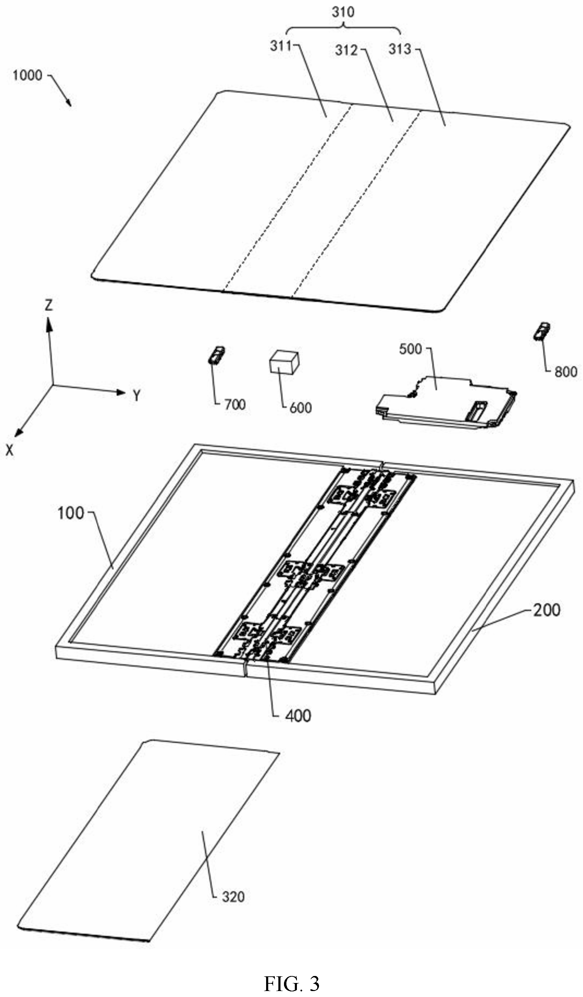

FIG. 2 is a diagram of an implementation of the electronic device 1000 shown in FIG. 1 in a closed state. FIG. 3 is an exploded diagram of an implementation of the electronic device 1000 shown in FIG. 1.

As shown in FIG. 1, FIG. 2, and FIG. 3, the electronic device 1000 includes a first housing 100, a second housing 200, a screen 300, and a first folding mechanism 400.

For example, the first folding mechanism 400 is connected between the first housing 100 and the second housing 200, and the first housing 100 and the second housing 200 may be unfolded or folded relative to each other by using the first folding mechanism 400. FIG. 1 shows that the electronic device 1000 is in the open state. FIG. 2 shows that the electronic device 1000 is in a folded state.

It may be understood that the electronic device 1000 has a plurality of folded states, and different folded states may be illustrated by using an opening angle between the first housing 100 and the second housing 200. For example, FIG. 2 shows a folded state in which an included angle between the first housing 100 and the second housing 200 is 0°. The folded state in which an opening angle is 0° may also be referred to as a closed state of the electronic device 1000. In other words, the closed state of the electronic device 1000 is one of the folded states of the electronic device 1000. It may be understood that, due to precision of a preparation process and an assembly process, when the electronic device 1000 is in the closed state, the opening angle between the first housing 100 and the second housing 200 may alternatively be 2°, 5°, 10°, or the like.

In some implementations, the closed state of the electronic device 1000 may also be considered as a state in which the first housing 100 and the second housing 200 are closest to each other.

It should be noted that a direction of a rotation axis of the electronic device 1000 is not limited to an X-axis direction shown in FIG. 2. In another implementation, the direction of the rotation axis of the electronic device 1000 may alternatively be a Y-axis direction or another direction.

For example, when the electronic device 1000 is in the open state, the first housing 100 and the second housing 200 are unfolded relative to each other, and the first housing 100 and the second housing 200 may be sequentially arranged side by side in the Y-axis direction. When the electronic device 1000 is in the closed state, the first housing 100 and the second housing 200 may be folded relative to each other, and the first housing 100 and the second housing 200 may be sequentially arranged in a Z-axis direction.

The screen 300 may be configured to display an image, a video, and the like. It may be understood that the screen 300 may be an inner screen, or may be an outer screen, or may include both an inner screen and an outer screen. When the electronic device 1000 is in the closed state, an image displayed on the inner screen cannot be seen from outside the electronic device 1000. The outer screen may display an image when the electronic device 1000 is in the closed state.

In FIG. 1 and FIG. 2, an example in which the screen 300 includes both the inner screen and the outer screen is used for description. The screen 300 may include an internal screen 310 (namely, the inner screen) and an external screen 320 (namely, the outer screen). The internal screen 310 may be spaced apart from the external screen 320, or may be connected to the external screen 320. In FIG. 1 and FIG. 2, an example in which the internal screen 310 is spaced apart from the external screen 320 is used for description.

It may be understood that, for ease of illustration in FIG. 1, the external screen 320 and the first housing 100 are stacked in the Z-axis direction. In another implementation, the first housing 100 may alternatively surround the external screen 320.

For example, the internal screen 310 may include a first display region 311, a second display region 312, and a third display region 313 (which are distinguished by using dashed lines in FIG. 3). The second display region 312 is connected between the first display region 311 and the third display region 313. The second display region 312 may be bent. The first display region 311 is fastened to the first housing 100, the second display region 312 is fastened to the first folding mechanism 400, and the third display region 313 is fastened to the second housing 200. In this way, when the first housing 100 and the second housing 200 are unfolded or folded relative to each other by using the first folding mechanism 400, the second display region 312 may be driven to bend. The first display region 311 and the third display region 313 may overlap each other in the Z-axis direction.

For example, when the electronic device 1000 is in the open state, the first display region 311, the second display region 312, and the third display region 313 are all located on a same side of the first housing 100 and the second housing 200. For example, the first display region 311, the second display region 312, and the third display region 313 may be arranged at approximately 180° (allowing a slight deviation, for example, at 165°, 177°, or 185°). In this case, the electronic device 1000 has a continuous large-area display region. That is, the electronic device 1000 can implement large-screen display, and user experience is good.

For example, when the electronic device 1000 is in a folded state, the second display region 312 may be bent. When the electronic device 1000 is in the closed state, the first display region 311 and the third display region 313 overlap each other in the Z-axis direction. In this case, the electronic device 1000 has a small size in an X-Y plane, and this is convenient for carrying and storage by a user. FIG. 2 shows that when the electronic device 1000 is in the closed state, the first display region 311 and the third display region 313 may be located between the first housing 100 and the second housing 200.

FIG. 2 shows that when the electronic device 1000 is in the closed state, the first display region 311 and the third display region 313 may be located between the first housing 100 and the second housing 200. In another implementation, when the screen 300 is an outer screen, a part of the screen 300 may be located on a side that is of the first housing 100 and that is away from the second housing 200, or a part of the screen 300 may be located on a side that is of the second housing 200 and that is away from the first housing 100. Specifically, this is not limited in this embodiment.

For example, the external screen 320 may be disposed on a side that is of the first housing 100 and that is away from the internal screen 310. FIG. 2 shows that when the electronic device 1000 is in the closed state, a display surface of the external screen 320 may face the outside of the electronic device 1000. In this way, when the electronic device 1000 is folded, the external screen 320 may also display an image. In this case, when the electronic device 1000 is in the closed state, a user may also perform an operation on the electronic device 1000 by using the external screen 320. In another implementation, the external screen 320 may also be disposed on a side that is of the second housing 200 and that is away from the internal screen 310.

It may be understood that, both an inner screen and an outer screen are disposed on the electronic device 1000, so that display requirements of different areas can be met. When the user requires a large display area, the user may unfold the first housing 100 and the second housing 200 of the electronic device 1000.

In another implementation, the electronic device 1000 may not include the screen 300.

In addition, FIG. 1 and FIG. 2 both show that the electronic device 1000 may be folded once. In another implementation, the electronic device 1000 may alternatively be folded a plurality of times. The following describes the multi-fold electronic device 1000 by using the accompanying drawings, and details are not described herein again.

As shown in FIG. 3, the electronic device 1000 may further include a speaker 500, a first sensor 600, a first magnetic attracting member 700, and a second magnetic attracting member 800.

For example, the first sensor 600 may be mounted on the first housing 100. The speaker 500 may be mounted on the second housing 200.

For example, the speaker 500 is also referred to as a "loudspeaker", and is configured to convert an audio electrical signal into a sound signal. The electronic device 1000 may be used to listen to music or answer a call in a hands-free mode by using the speaker 500.

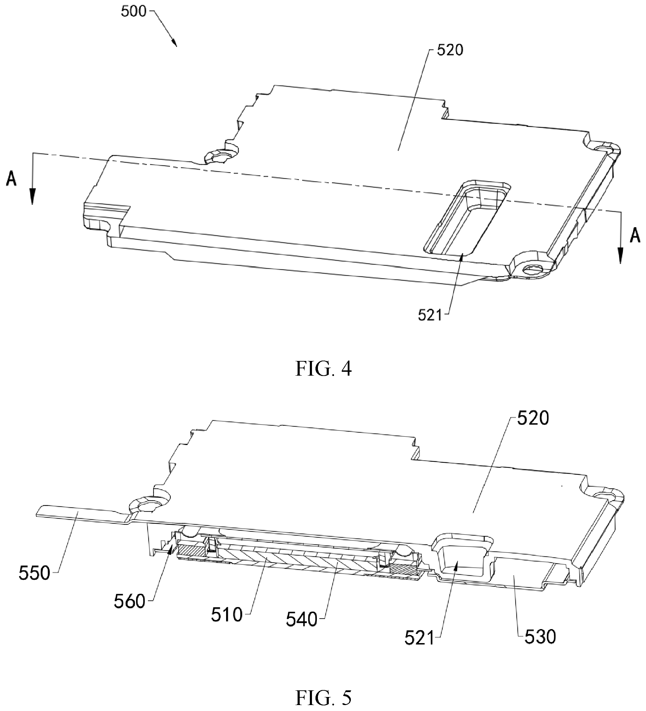

FIG. 4 is a diagram of a structure of an implementation of the speaker 500 shown in FIG. 3. FIG. 5 is a sectional view of an implementation of the speaker 500 shown in FIG. 4 along a section line A-A.

As shown in FIG. 4 and FIG. 5, the speaker 500 may include a magnetic member 510. The magnetic member 510 may be made of a magnetic material, for example, a magnet.

The first sensor 600 may be configured to detect magnetic field strength of the magnetic member 510 of the speaker 500, to detect the opening angle of the second housing 200 relative to the first housing 100 based on the magnetic field strength. For example, the electronic device 1000 may further include a processor (not shown in the figure). The processor may detect the opening angle between the first housing 100 and the second housing 200 based on the magnetic field strength detected by the first sensor 600, and the electronic device 1000 may perform a corresponding action based on the opening angle between the first housing 100 and the second housing 200.

It may be understood that, the magnetic member 510 of the speaker 500 is reused as a magnet for detecting the opening angle of the second housing 200 relative to the first housing 100, and no magnet needs to be additionally disposed for cooperation with the first sensor 600. This helps release a part of internal space of the electronic device 1000, to accommodate more electronic components (for example, a camera module, a fingerprint module, a battery, an antenna, and a sensor), and utilization of the internal space of the electronic device 1000 is high.

For example, when the electronic device 1000 switches from the folded state to the open state, the electronic device 1000 switches from displaying a picture on the external screen 320 originally to displaying on the internal screen 310.

For example, when the electronic device 1000 does not include the screen 300 or does not include the external screen 320, when the electronic device 1000 switches from the folded state to the open state, the electronic device 1000 may wake up a screen.

In some implementations, the first sensor 600 may be a Hall (hall) sensor or a tunnel magneto-resistance (tunnel magneto-resistance, TMR) sensor.

The following specifically describes several implementations in which the first sensor 600 detects a magnetic field of the magnetic member 510 of the speaker 500 with reference to the accompanying drawings.

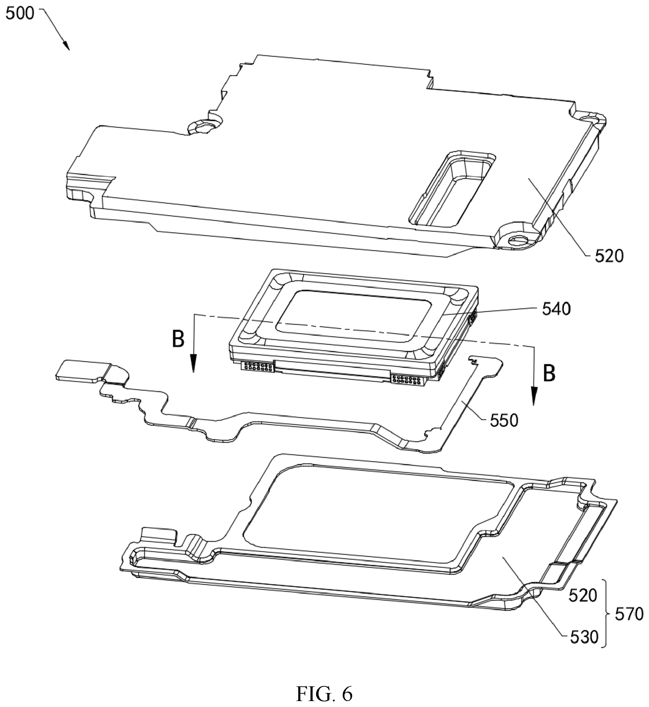

FIG. 6 is a partial exploded diagram of an implementation of the speaker 500 shown in FIG. 4.

As shown in FIG. 5 and FIG. 6, the speaker 500 may include a first sub-housing 520, a second sub-housing 530, a core 540, and a flexible circuit board 550.

For example, the first sub-housing 520 is connected to the second sub-housing 530. The first sub-housing 520 and the second sub-housing 530 may enclose accommodating space 560. At least a part of the core 540 may be located in the accommodating space 560. For example, the core 540 may be fastened to the second sub-housing 530.

It may be understood that the first sub-housing 520 and the second sub-housing 530 may form a housing 570 of the speaker 500, to protect an internal component (for example, the core 540), so that the speaker 500 has good working reliability. The housing 570 is easy to disassemble, and difficulty of assembling the core 540 and the housing 570 is low.

For example, the first sub-housing 520 may be made of a material such as metal or plastic. The second sub-housing 530 may also be made of a material such as metal or plastic. The materials of the first sub-housing 520 and the second sub-housing 530 may be the same or different.

In some implementations, the first sub-housing 520 may include a plurality of mechanical parts made of different materials. This is not limited in this application. The second sub-housing 530 may also include a plurality of mechanical parts made of different materials. This is not limited in this application.

In another implementation, the first sub-housing 520 and the second sub-housing 530 may also be an integral structure. Integrating two components into an integral structure by using an integral molding process means that, in a process of forming one of the two components, the component is connected to the other component, and the two components are connected without secondary processing (for example, adhesive bonding, welding, snap-fit connections, or screw connection).

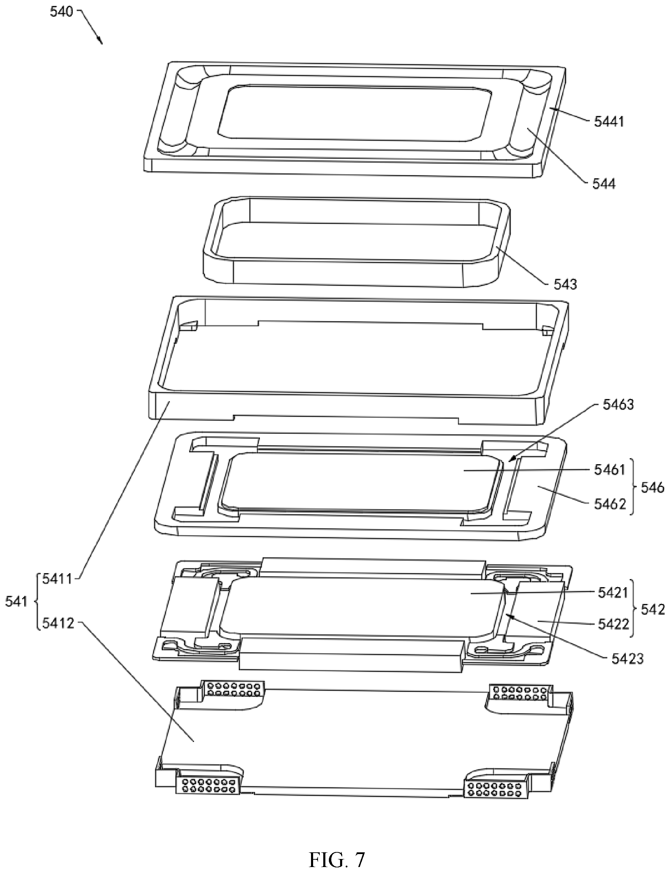

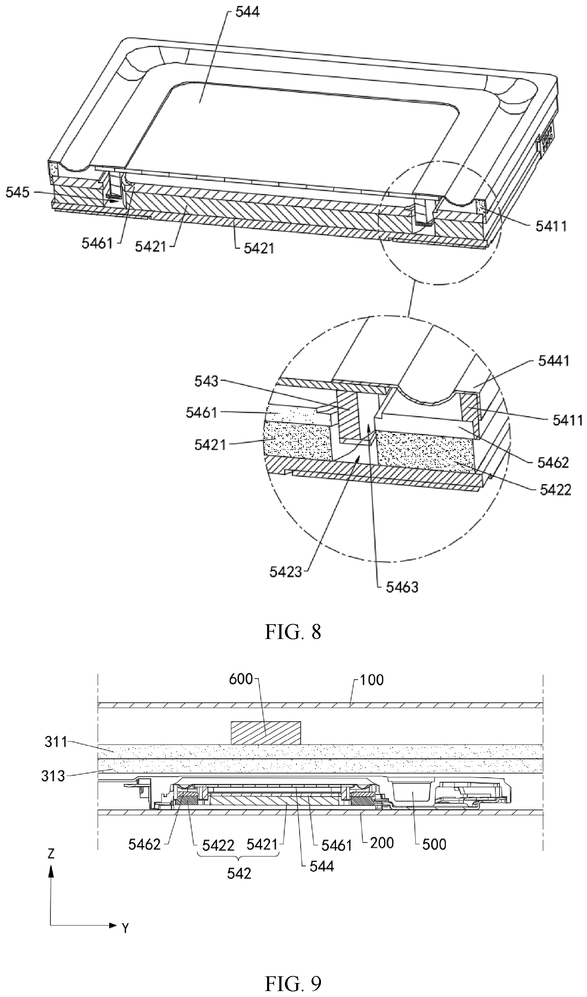

FIG. 7 is an exploded diagram of an implementation of the core 540 shown in FIG. 6. FIG. 8 is a sectional view of an implementation of the core 540 shown in FIG. 6 along a section line B-B.

As shown in FIG. 7 and FIG. 6, the core 540 may include a frame 541, a magnetic circuit system 542, a voice coil 543, and a diaphragm 544. The core 540 may be configured to make a sound.

For example, the frame 541 may include a side wall 5411 and a bottom plate 5412. The side wall 5411 may be connected to a peripheral edge of the bottom plate 5412. The side wall 5411 and the bottom plate 5412 may enclose a groove 545. The magnetic circuit system 542 may be mounted in the groove 545. For example, the frame 541 may be fastened to the second sub-housing 530.

For example, the magnetic circuit system 542 may include a central magnet 5421 and an edge magnet 5422. The edge magnet 5422 may surround the central magnet 5421, and is spaced apart from a side wall 5411 of the central magnet 5421. In other words, there is spare space between the side wall 5411 of the central magnet 5421 and the edge magnet 5422. It may be understood that a magnetic gap 5423 is formed between the side wall 5411 of the central magnet and the edge magnet 5422. In this case, the magnetic gap 5423 has a magnetic field in a specific magnetic field direction. For example, the direction of the magnetic field may be a direction from the central magnet 5421 toward the edge magnet 5422, or a direction from the edge magnet 5422 toward the central magnet 5421.

It may be understood that a shape of the magnetic circuit system 542 is not limited to a shape shown in this application. In another implementation, the magnetic circuit system 542 may alternatively be in another shape, as long as a magnetic field may be generated to drive movement of the voice coil 543.

In some implementations, the magnetic circuit system 542 may be fastened to the frame 541. For example, the central magnet 5421 and the edge magnet 5422 may be fastened to the bottom plate 5412 of the frame 541.

In some implementations, the magnetic circuit system 542 may include a magnetic member 510. The following specifically describes a location relationship of the magnetic member 510 in the magnetic circuit system 542.

In some implementations, a part of the voice coil 543 may be located outside the magnetic circuit system 542, and a part is located in the magnetic gap 5423 of the magnetic circuit system 542. That is, the voice coil 543 is located between the central magnet 5421 and the edge magnet 5422.

For example, the voice coil 543 may be a ring. The voice coil 543 may be sleeved over the central magnet 5421. When a current is applied to the voice coil 543, a part of the voice coil 543 in the magnetic gap 5423 may move in the Z-axis direction under an action of a magnetic field.

For example, the voice coil 543 may include a conductive coil (not shown in the figure). The conductive coil is configured to receive a current related to an audio signal.

In some implementations, the diaphragm 544 may be fastened to the frame 541. For example, the diaphragm 544 may be fastened to a side that is of the side wall 5411 and that is away from the bottom plate 5412. The voice coil 543 and the magnetic circuit system 542 may be located between the bottom plate 5412 and the diaphragm 544.

For example, a peripheral edge 5441 of the diaphragm 544 is fastened to the side wall 5411 of the frame 541. In this way, the diaphragm 544 experiences uniform stress.

In some implementations, the voice coil 543 may be fastened to the diaphragm 544. For example, one end of the voice coil 543 may be fastened to a side that is of the diaphragm 544 and that faces the magnetic circuit system 542, and the other end may be located in the magnetic gap 5423 of the magnetic circuit system 542.

It may be understood that, after the voice coil 543 is energized, the voice coil 543 moves in the Z-axis direction under an action of the magnetic field of the magnetic gap 5423, and the voice coil 543 may drive the diaphragm 544 to vibrate in the Z-axis direction. In this case, vibration of the diaphragm 544 drives air near the diaphragm 544 to compress and expand, to make a sound.

In some implementations, one end of the flexible circuit board 550 may be electrically connected to the voice coil 543 of the core 540, and the other end may be electrically connected to a battery (not shown in the figure) of the electronic device 1000. In this way, the battery can supply power to the speaker 500. For example, a part of the speaker 500 may be located in the accommodating space 560, to electrically connect to the voice coil 543, and the other end may extend out of the accommodating space 560, to electrically connect to the battery.

In some implementations, the core 540 may further include a magnetic conductive sheet 546. The magnetic conductive sheet 546 may be fastened to the frame 541. The magnetic conductive sheet 546 may be disposed opposite to the magnetic circuit system 542. For example, the magnetic conductive sheet 546 and the magnetic circuit system 542 may be stacked in the Z-axis direction. It may be understood that, the magnetic conductive sheet 546 may enhance a magnetic field around a magnet, to improve magnetic field strength in the magnetic gap 5423. Compared with a solution in which no magnetic conductive sheet 546 is disposed, in this embodiment, a smaller current is required when the voice coil 543 moves by same displacement.

It may be understood that the magnetic conductive sheet 546 may be designed based on a shape of the magnet. For example, the magnetic conductive sheet 546 may include a first part 5461 and a second part 5462. The second part 5462 surrounds the first part 5461 and is spaced apart from the first part 5461. The first part 5461 may be disposed opposite to the central magnet 5421, and the second part 5462 may be disposed opposite to the edge magnet 5422. The first part 5461 and the second part 5462 may enclose a second gap 5463. The second gap 5463 communicates with the magnetic gap 5423. A part of the voice coil 543 may be in the second gap 5463.

It may be understood that the speaker 500 in the foregoing embodiment is a moving coil speaker. That is, the magnetic circuit system 542 is a fastened mechanical part, and the voice coil 543 moves under an action of a magnetic field of the magnetic circuit system 542 after being energized. In another embodiment, the speaker 500 may alternatively be a moving iron speaker. That is, the magnetic circuit system 542 may also be fastened to the diaphragm 544, the voice coil 543 may be fastened to the frame 541, the voice coil 543 may generate a magnetic field after being energized, and the magnetic circuit system 542 may move under an action of the magnetic field of the voice coil 543. It may be understood that a type of the speaker 500 is not limited in this application.

FIG. 9 is a partial sectional view of an implementation of the electronic device 1000 shown in FIG. 2 along a section line C-C. FIG. 9 is an assembly diagram of the speaker 500 and the first sensor 600 inside the electronic device 1000. It may be understood that, in FIG. 9, an example in which the magnetic member 510 may be the central magnet 5421 of the magnetic circuit system 542 is used for illustration.

As shown in FIG. 9, when the electronic device 1000 is in the closed state, the first sensor 600 and the speaker 500 may be disposed opposite to each other. It may be understood that, that the first sensor 600 and the speaker 500 are disposed opposite to each other means that a projection of the first sensor 600 on a reference plane and a projection of the speaker 500 on the reference plane at least partially overlap in the thickness direction (the Z-axis direction) of the electronic device 1000. The reference plane is perpendicular to the thickness direction of the electronic device 1000.

In some implementations, another mechanical part, for example, the first display region 311 and the third display region 313, may be disposed between the first sensor 600 and the speaker 500. In another implementation, no other mechanical part may be disposed between the first sensor 600 and the speaker 500.

It may be understood that a magnetic field of the magnetic member 510 of the speaker 500 in the thickness direction of the electronic device 1000 may be greater than a magnetic field in the X-Y plane. The first sensor 600 and the speaker 500 are disposed opposite to each other, so that the first sensor 600 can receive and detect more magnetic leakage of the magnetic member 510 in the thickness direction of the electronic device 1000, to detect the opening angle between the first housing 100 and the second housing 200. Detection precision of the first sensor 600 is high.

In another implementation, the first sensor 600 and the speaker 500 may not be disposed opposite to each other. That is, in the thickness direction of the electronic device 1000, the projection of the first sensor 600 on the reference plane and the projection of the speaker 500 on the reference plane may be staggered. The first sensor 600 may be disposed at any location that is on the first housing 100 and at which the magnetic field of the magnetic member 510 can be detected.

In some implementations, when the electronic device 1000 is in the closed state, the first sensor 600 and the magnetic member 510 may be disposed opposite to each other. That the first sensor 600 and the magnetic member 510 may be disposed opposite to each other means that a projection of the first sensor 600 on a reference plane and a projection of the magnetic member 510 on the reference plane at least partially overlap in the thickness direction of the electronic device 1000. The reference plane is perpendicular to the thickness direction of the electronic device 1000. It may be understood that, the magnetic member 510 has a large amount of magnetic leakage in the Z-axis direction, and the first sensor 600 and the magnetic member 510 are disposed opposite to each other, so that magnetic field strength detected by the first sensor 600 is high, and detection precision is high.

In some implementations, the magnetic circuit system 542 may include the magnetic member 510. For example, the magnetic member 510 may be the central magnet 5421 of the magnetic circuit system 542. The first sensor 600 may be configured to detect magnetic field strength of the central magnet 5421, so that the electronic device 1000 can detect the opening angle of the second housing 200 relative to the first housing 100 based on the magnetic field strength.

It may be understood that, the magnetic circuit system 542 may not only be used in cooperation with the voice coil 543 to enable the speaker 500 to make a sound, but also be used in cooperation with the first sensor 600 to detect the opening angle of the second housing 200 relative to the first housing 100. The magnetic circuit system 542 of the speaker 500 is reused as a magnet for detecting the opening angle of the second housing 200 relative to the first housing 100, and no magnet needs to be additionally disposed for cooperation with the first sensor 600. This helps release a part of internal space of the electronic device 1000, to accommodate more electronic components, and utilization of the internal space of the electronic device 1000 is high.

In some implementations, when the electronic device 1000 is in the closed state, the first sensor 600 and the central magnet 5421 may be disposed opposite to each other. In other words, a projection of the first sensor 600 on a reference plane and a projection of the central magnet 5421 on the reference plane at least partially overlap in the thickness direction of the electronic device 1000. It may be understood that a location of the central magnet 5421 is approximately at a center of the magnetic circuit system 542. When the electronic device 1000 is in the closed state, the first sensor 600 and the central magnet 5421 are further disposed opposite to each other, so that magnetic field strength detected by the first sensor 600 is high, and detection precision is high.

In another implementation, the magnetic member 510 may be the edge magnet 5422 of the magnetic circuit system 542. The first sensor 600 may be configured to detect magnetic field strength of the edge magnet 5422. It may be understood that, when the edge magnet 5422 is the magnetic member 510, the edge magnet 5422 may also be disposed opposite to the first sensor 600.

In another implementation, the magnetic member 510 may be the central magnet 5421 and the edge magnet 5422. The first sensor 600 may simultaneously detect magnetic fields of the central magnet 5421 and the edge magnet 5422. A part of the first sensor 600 may be disposed opposite to the central magnet 5421, and a part of the first sensor 600 may be disposed opposite to the edge magnet 5422.

In some implementations, the magnetic circuit system 542 may be located on a side that is of the diaphragm 544 and that is away from the second housing 200. When the electronic device 1000 is in the closed state, the magnetic circuit system 542 may be located on the side that is of the diaphragm 544 and that is close to the first housing 100. For example, the core 540 shown in FIG. 8 may be reversed in the Z-axis direction, so that when the electronic device 1000 is in the closed state, the magnetic circuit system 542 may be located on the side that is of the diaphragm 544 and that is close to the first housing 100. It may be understood that, compared with a case in which when the electronic device 1000 is in the closed state, the magnetic circuit system 542 may be located on a side that is of the diaphragm 544 and that is away from the first housing 100, in this embodiment, a distance between the magnetic circuit system 542 and the first housing 100 is shorter, and the magnetic field strength of the magnetic member 510 detected by the first sensor 600 may be higher. This helps improve detection precision.

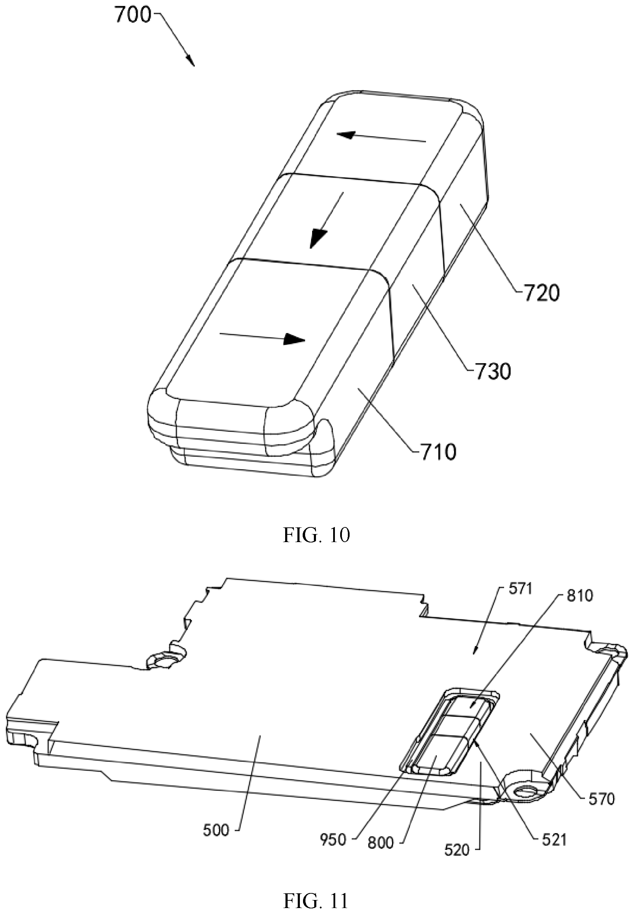

FIG. 10 is a diagram of a structure of an implementation of the first magnetic attracting member 700 shown in FIG. 3.

As shown in FIG. 10, the first magnetic attracting member 700 may be a Halbach magnet array. It may be understood that, compared with a first magnetic attracting member 700 having only north-south pole magnets, the Halbach magnet array has stronger magnetic field strength near the magnets.

In some implementations, the first magnetic attracting member 700 may use a material capable of generating magnetic attraction with a magnet or another magnetic component, for example, a ferromagnetic material.

For example, the first magnetic attracting member 700 may include a first magnet 710, a second magnet 720, and a third magnet 730. The first magnet 710, the second magnet 720, and the third magnet 730 are arranged in a first direction, and the third magnet 730 is located between the first magnet 710 and the second magnet 720. A polarity direction of the first magnet 710 is opposite to a polarity direction of the second magnet 720, and polarity directions of the first magnet 710, the second magnet 720, and the third magnet 730 are all different (in FIG. 10, the polarity directions of the first magnet 710, the second magnet 720, and the third magnet 730 are shown by arrows).

It may be understood that the polarity direction may be a direction from the north pole (N) to the south pole (S), or a direction from the south pole (S) to the north pole (N). One of the first magnet 710 and the second magnet 720 may have a north (N) polarity, and the other may have a south (S) polarity. The first magnet 710 and the second magnet 720 may form an NS magnetic field.

In another implementation, the first magnetic attracting member 700 may not include the third magnet 730, and includes only the first magnet 710 and the second magnet 720.

In another implementation, the first magnetic attracting member 700 may alternatively include one magnet, and the magnet includes two parts with opposite polarity directions. The magnet may be made by using a bipolar magnetization technique.

In some implementations, a length of the first magnetic attracting member 700 may be within a range of 8 mm to 12 mm, a width may be within a range of 1 mm to 4 mm, and a height may be within a range of 1 mm to 3 mm. For example, the length of the first magnetic attracting member 700 may be 10.3 mm, the width may be 2.6 mm, and the height may be 1.8 mm.

In some implementations, the second magnetic attracting member 800 may be a Halbach magnet array. It may be understood that, both the first magnetic attracting member 700 and the second magnetic attracting member 800 are disposed as Halbach magnet arrays, and attraction between the first magnetic attracting member 700 and the second magnetic attracting member 800 is large.

In some implementations, the first magnetic attracting member 700 may use a material capable of generating magnetic attraction with a magnet or another magnetic component, for example, a ferromagnetic material.

For example, the second magnetic attracting member 800 may also include a first magnet, a second magnet, and a third magnet. For specific disposition of the first magnet of the second magnetic attracting member 800, the second magnet of the second magnetic attracting member 800, and the third magnet of the second magnetic attracting member 800, refer to a disposition manner of the first magnet 710 of the first magnetic attracting member 700, the second magnet 720 of the first magnetic attracting member 700, and the third magnet 730 of the first magnetic attracting member 700. Details are not described herein again.

In some implementations, a length of the first magnetic attracting member 700 may be within a range of 8 mm to 12 mm, a width may be within a range of 1 mm to 4 mm, and a height may be within a range of 1 mm to 3 mm. For example, the length of the first magnetic attracting member 700 may be 10.3 mm, the width may be 2.6 mm, and the height may be 1.8 mm.

In some implementations, alternatively, one of the first magnetic attracting member 700 and the second magnetic attracting member 800 may be a magnet, and the other may be a metal member (for example, an iron piece) capable of generating attraction with the magnet. In this way, there may also be attraction between the first magnetic attracting member 700 and the second magnetic attracting member 800.

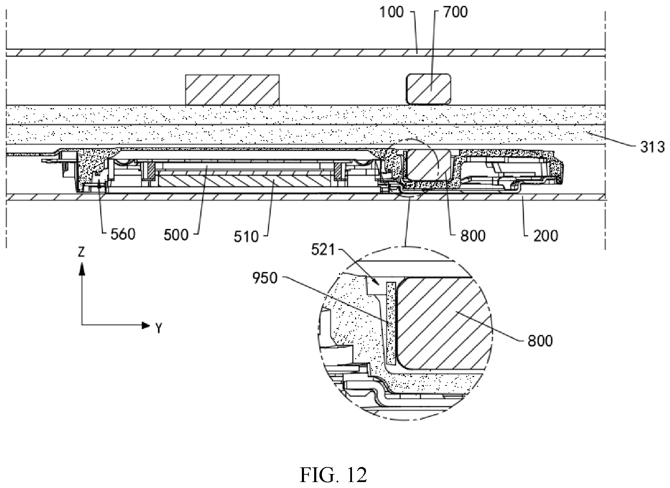

FIG. 11 is an assembly diagram of an implementation of the speaker 500 and the second magnetic attracting member 800 shown in FIG. 3. FIG. 12 is a partial sectional view of another implementation of the electronic device 1000 shown in FIG. 2 along a section line C-C.

As shown in FIG. 11 and FIG. 12, the first magnetic attracting member 700 may be mounted on the first housing 100. The second magnetic attracting member 800 may be mounted on the second housing 200. When the electronic device 1000 is in the closed state, the first magnetic attracting member 700 and the second magnetic attracting member 800 may be disposed opposite to each other. In this way, there may be attraction between the first magnetic attracting member 700 and the second magnetic attracting member 800. When the electronic device 1000 is in the closed state, the attraction between the first magnetic attracting member 700 and the second magnetic attracting member 800 may enable the first housing 100 and the second housing 200 to close reliably.

In some implementations, the second magnetic attracting member 800 and the speaker 500 may be stacked in the thickness direction of the electronic device 1000.

It may be understood that, the second magnetic attracting member 800 and the speaker 500 are stacked, so that an area that is on an X-Y plane in the second housing 200 and that is originally used to mount the second magnetic attracting member 800 can be saved, and the area can be used to mount more electronic components. For example, the saved area that is originally used to mount the second magnetic attracting member 800 can be used to increase a volume of a rear cavity of the speaker 500, to improve sound-making performance of the speaker 500.

In some implementations, the second magnetic attracting member 800 may be located on a side that is of the speaker 500 and that is away from the second housing 200. When the electronic device 1000 is in the closed state, the second magnetic attracting member 800 may be located on the side that is of the speaker 500 and that is close to the first housing 100.

It may be understood that, compared with a solution in which the speaker 500 and the second magnetic attracting member 800 are stacked on the X-Y plane, disposing the second magnetic attracting member 800 on the side that is of the speaker 500 and that is away from the second housing 200 reduces a distance between the second magnetic attracting member 800 and the first magnetic attracting member 700, and improves the attraction between the first magnetic attracting member 700 and the second magnetic attracting member 800 when the electronic device 1000 is in the closed state. This facilitates closure reliability of the electronic device 1000. In addition, compared with the solution in which the speaker 500 and the second magnetic attracting member 800 are stacked on the X-Y plane, in this embodiment, when the electronic device 1000 is in the closed state, the distance between the second magnetic attracting member 800 and the first magnetic attracting member 700 is smaller. When the attraction between the second magnetic attracting member 800 and the first magnetic attracting member 700 remains unchanged, a volume of the second magnetic attracting member 800 in this implementation may be smaller. This helps reduce mass of the electronic device 1000.

In another implementation, the second magnetic attracting member 800 may be located on a side that is of the speaker 500 and that is close to the second housing 200. When the electronic device 1000 is in the closed state, the second magnetic attracting member 800 may be located on the side that is of the speaker 500 and that is away from the first housing 100.

In some implementations, the second magnetic attracting member 800 may be fastened to the housing of the speaker 500. It may be understood that, when the housing of the speaker 500 may include the first sub-housing 520 and the second sub-housing 530, the second magnetic attracting member 800 may be fastened to the first sub-housing 520 or the second sub-housing 530.

In some implementations, the housing 570 of the speaker 500 may be provided with a mounting slot 521. An opening of the mounting slot 521 may be located on an outer surface of the housing 570. The outer surface of the housing 570 is a surface that faces away from the accommodating space 560. For example, the opening of the mounting slot 521 may be located on an outer surface of the first sub-housing 520. The second magnetic attracting member 800 may be fastened in the mounting slot 521.

In some implementations, when the electronic device 1000 is in the closed state, the opening of the mounting slot 521 may face a side on which the first housing 100 is located.

It may be understood that the mounting slot 521 is provided, so that the second magnetic attracting member 800 is mounted in the mounting slot 521, and a location of the second magnetic attracting member 800 can be fixed, to reduce a risk of displacement of the speaker 500 due to an external force, and keep the attraction between the first magnetic attracting member 700 and the second magnetic attracting member 800 within a large range.

In some implementations, a top surface 810 of the second magnetic attracting member 800 may be approximately flush with a top surface 571 of the housing 570. In this way, the second magnetic attracting member 800 is basically completely accommodated in the mounting slot 521, to avoid interference between the second magnetic attracting member 800 and another component near the speaker 500.

In another implementation, the opening of the mounting slot 521 may alternatively be located on an outer surface of the second sub-housing 530.

In some implementations, the electronic device 1000 may further include a magnetic isolation sheet 950. The magnetic isolation sheet 950 may be fastened to the speaker 500, and is located between the second magnetic attracting member 800 and the magnetic member 510. For example, the magnetic isolation sheet 950 may be fastened in the mounting slot 521, and is located on a side that is of the second magnetic attracting member 800 and that is close to the magnetic member 510. It may be understood that, disposing the magnetic isolation sheet 950 can reduce impact of the second magnetic attracting member 800 on the magnetic member 510, and can reduce interference of the second magnetic attracting member 800 on working of the speaker 500.

For example, the magnetic isolation sheet 950 may be a structure prepared by using a magnetic isolation material.

In another implementation, the magnetic isolation sheet 950 may alternatively be fastened to a side that is of the third display region 313 and that faces the second housing 200.

In some implementations, this application may further provide a speaker 500. The speaker 500 may include a second magnetic attracting member 800, a first sub-housing 520, a second sub-housing 530, a core 540, and a flexible circuit board 550. In other words, the second magnetic attracting member 800 may be used as a part of the speaker 500. In a process of assembling the speaker 500, assembly with the first sub-housing 520 is completed. Then, when the speaker 500 is mounted on the second housing 200, assembly of the second magnetic attracting member 800 is completed at the same time. In this way, assembly steps of the electronic device 1000 are simplified.

The technical solutions of this application may be applied not only to the electronic device 1000 that is folded once shown in the foregoing embodiments, but also to a multi-fold electronic device 1000. The following further describes the multi-fold electronic device 1000 with reference to the accompanying drawings, and technical content that is the same as that of the electronic device 1000 in the foregoing implementations is not described again.

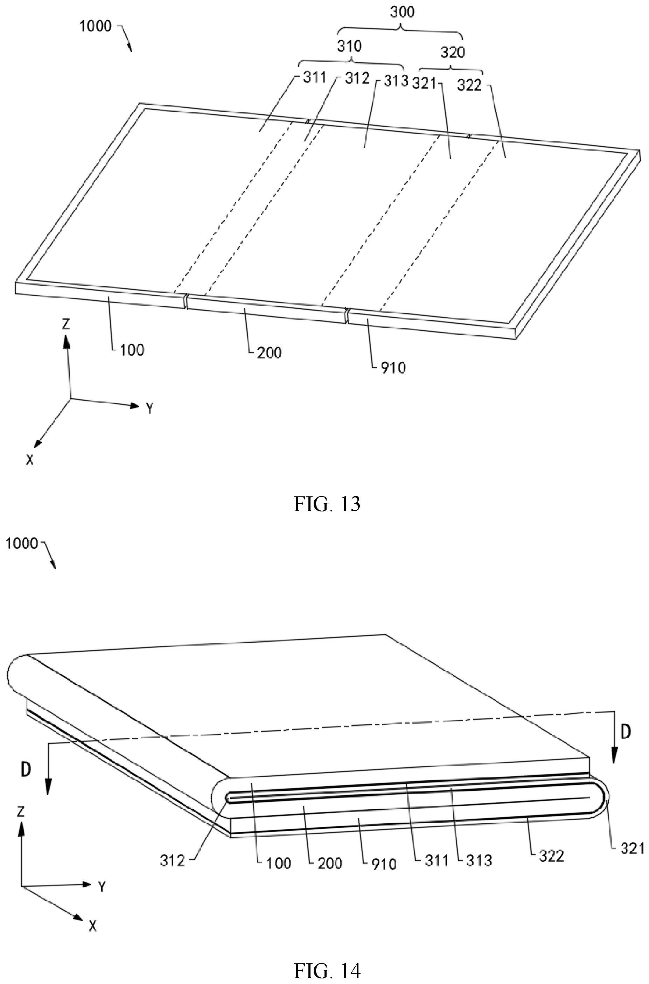

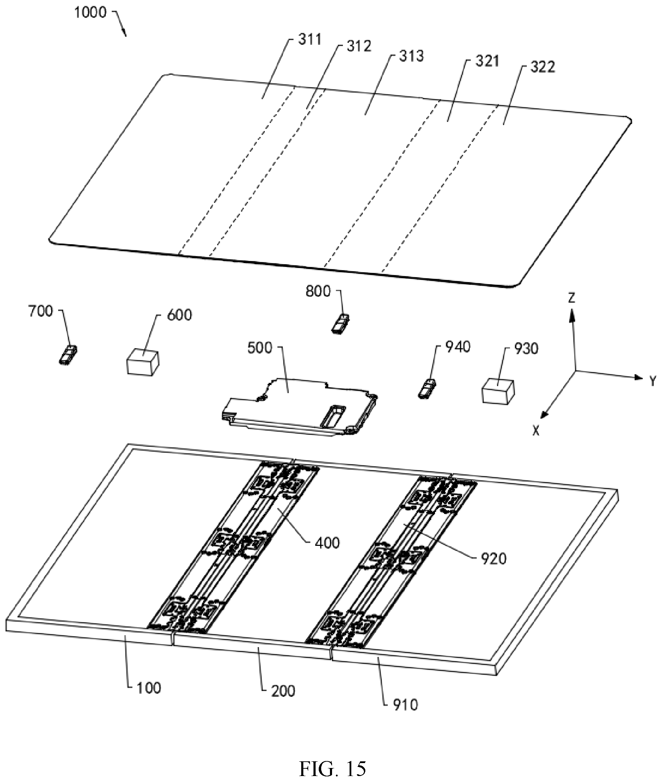

FIG. 13 is a diagram of a structure of another implementation of an electronic device 1000 in an open state according to an embodiment of this application. FIG. 14 is a diagram of a structure of the electronic device 1000 shown in FIG. 13 in a closed state. FIG. 15 is an exploded diagram of an implementation of the electronic device 1000 shown in FIG. 13.

As shown in FIG. 13 and FIG. 14, the electronic device 1000 may include a first housing 100, a second housing 200, a third housing 910, a screen 300, a first folding mechanism 400, a second folding mechanism 920, a speaker 500, a first sensor 600, a second sensor 930, a first magnetic attracting member 700, a second magnetic attracting member 800, and a third magnetic attracting member 940. For a manner of disposing the first housing 100, the second housing 200, the first folding mechanism 400, the speaker 500, the first sensor 600, the first magnetic attracting member 700, and the second magnetic attracting member 800, refer to the manner of disposing the first housing 100, the second housing 200, the first folding mechanism 400, the speaker 500, the first sensor 600, the first magnetic attracting member 700, and the second magnetic attracting member 800 in the foregoing embodiment. Details are not described herein again.

For example, the second folding mechanism 920 is connected between the second housing 200 and the third housing 910, and the second housing 200 and the third housing 910 are unfolded or folded relative to each other by using the second folding mechanism. In this way, the first housing 100, the second housing 200, and the third housing 910 may rotate by using the first folding mechanism 400 and the second folding mechanism 920, to drive a first display region 311, a second display region 312, a third display region 313, a fourth display region 321, and a fifth display region 322 to rotate, so as to implement folding in a Z-axis direction. The electronic device 1000 is folded twice.

For example, the screen 300 may include an internal screen 310 and an external screen 320. The internal screen 310 is connected to the external screen 320. The internal screen 310 may include the first display region 311, the second display region 312, and the third display region 313. The external screen 320 may include the fourth display region 321 and the fifth display region 322. The fourth display region 321 is fastened to the second folding mechanism 920. The fifth display region 322 is fastened to the third housing 910. In this way, when the second housing 200 and the third housing 910 are unfolded or folded relative to each other by using the second folding mechanism 920, the fourth display region 321 may be driven to bend. The fifth display region 322 and the third display region 313 may overlap each other in the Z-axis direction.

For example, when the electronic device 1000 is in the open state, the first display region 311, the second display region 312, the third display region 313, the fourth display region 321, and the fifth display region 322 are all located on a same side of the first housing 100, the second housing 200, and the third housing 910. For example, the first display region 311, the second display region 312, the third display region 313, the fourth display region 321, and the fifth display region 322 may be arranged at approximately 180° (allowing a slight deviation, for example, at 165°, 177°, or 185°). In this case, the electronic device 1000 has a continuous large-area display region. That is, the electronic device 1000 can implement large-screen display, and user experience is good.

For example, when the electronic device 1000 is in the closed state, the fourth display region 321 may be bent. The fifth display region 322 and the third display region 313 overlap each other in the Z-axis direction. In this case, the electronic device 1000 has a small size in an X-Y plane, and this is convenient for carrying and storage by a user.

It may be understood that an angle at which the first housing 100 is unfolded or folded relative to the second housing 200 may be the same as or different from an angle at which the second housing 200 is unfolded or folded relative to the third housing 910. In other words, the user may enable, according to a requirement, all of the first display region 311, the second display region 312, the third display region 313, the fourth display region 321, and the fifth display region 322 to display images, or may enable a part of the display regions to display images. For example, the first housing 100 may be opened relative to the second housing 200, and the second housing 200 may be closed relative to the third housing 910. In this case, the first display region 311, the second display region 312, and the third display region 313 display images. Alternatively, the first housing 100 may be closed relative to the second housing 200, and the second housing 200 may be closed relative to the third housing 910. In this case, the fifth display region 322 may display an image. Alternatively, the first housing 100 may be opened relative to the second housing 200, the second housing 200 may be opened relative to the third housing 910, and the first display region 311, the second display region 312, the third display region 313, the fourth display region 321, and the fifth display region 322 all display images.

In some implementations, the internal screen 310 and the external screen 320 may be an entire screen, or may be two independent screens.

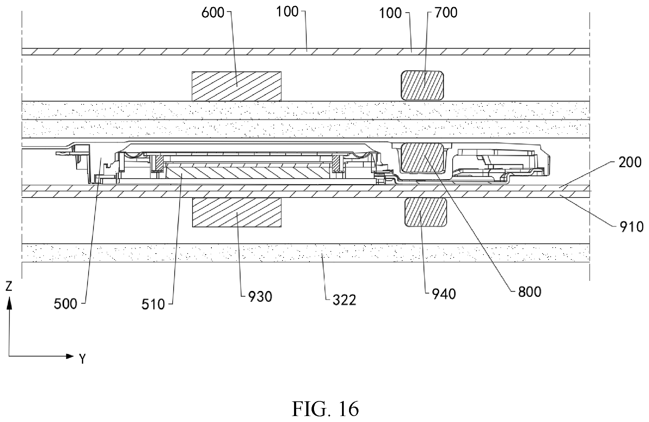

FIG. 16 is a diagram of a structure of an implementation of the electronic device 1000 shown in FIG. 14 along a section line D-D.

As shown in FIG. 15 and FIG. 16, the second sensor 930 may be mounted on the third housing 910. The second sensor 930 is configured to detect magnetic field strength of the magnetic member 510 of the speaker 500, to detect opening or closing of the third housing 910 relative to the second housing 200. For example, when the electronic device 1000 is in a folded state, the second sensor 930 may be disposed opposite to the magnetic member 510 of the speaker 500.

It may be understood that the speaker 500, the first sensor 600, and the second sensor 930 are disposed. The speaker 500 may include the magnetic member 510. The first sensor 600 may be configured to detect magnetic field strength of the magnetic member 510 of the speaker 500, to detect an opening angle of the second housing 200 relative to the first housing 100 based on the magnetic field strength. The second sensor 930 is configured to detect magnetic field strength of the magnetic member 510, to detect an opening angle of the third housing 910 relative to the second housing 200 based on the magnetic field strength. In this way, a processor of the electronic device 1000 can learn, based on detection results of the first sensor 600 and the second sensor 930, the opening angle of the first housing 100 relative to the second housing 200 and the opening angle of the second housing 200 relative to the third housing 910. In other words, the magnetic field of the magnetic member 510 of the speaker 500 is reused, the second sensor 930 detects the magnetic field strength of the magnetic member 510, and the electronic device may detect the opening angle of the third housing 910 relative to the second housing 200 based on the magnetic field strength.

For example, the processor may further control the first display region 311, the second display region 312, the third display region 313, the fourth display region 321, and the fifth display region 322 based on opening and closing of the first housing 100 relative to the second housing 200 and opening and closing of the second housing 200 relative to the third housing 910, to select an appropriate screen for display in different scenarios.

In some implementations, the third magnetic attracting member 940 may be mounted on the third housing 910. When the electronic device 1000 is in the closed state, the third magnetic attracting member 940 may be disposed opposite to the second magnetic attracting member 800. It may be understood that there is attraction between the third magnetic attracting member 940 and the second magnetic attracting member 800 or between the third magnetic attracting member 940 and the first magnetic attracting member 700. When the electronic device 1000 is in the closed state, the attraction between the third magnetic attracting member 940 and the first magnetic attracting member 700/the second magnetic attracting member 800 may enable the third housing 910 and the second housing 200 to close reliably.

For example, the third magnetic attracting member 940 may use a material capable of generating magnetic attraction with a magnet or another magnetic component, for example, a ferromagnetic material. For example, the third magnetic attracting member 940 may also be a Halbach magnet array.

It may be understood that at least one of the first magnetic attracting member 700, the second magnetic attracting member 800, and the third magnetic attracting member 940 is a magnet.

It may be understood that, in an electronic device that is folded twice, the third housing 910 is not limited to being located on a side that is of the second housing 200 and that is away from the first housing 100. In another implementation, the third housing 910 may alternatively be located on a side that is of the first housing 100 and that is away from the second housing 200. When the electronic device 1000 is in the closed state, the third housing 910 may also be located on the side that is of the first housing 100 and that is away from the second housing 200.

In another implementation, the electronic device 1000 may also be folded approximately in a shape of 6 or 9. For example, when the electronic device 1000 is in the open state, the third housing 910 may be connected to the side that is of the second housing 200 and that is away from the first housing 100. When the electronic device 1000 is in the closed state, the third housing 910 may be located on the side that is of the first housing 100 and that is away from the second housing 200. A folding manner of the electronic device 1000 is not limited in this application.

In another implementation, the electronic device 1000 may alternatively be folded more than twice. For example, the electronic device 1000 may be folded three times, and the electronic device 1000 is folded in a "W" shape. Alternatively, the electronic device 1000 may be folded five times or seven times. It may be understood that, when the electronic device 1000 is folded a plurality of times, a plurality of sensors configured to detect magnetic field strength of the magnetic member 510 may also be disposed, to detect an opening degree of each housing.

In some implementations, this application may further provide an electronic device 1000. The electronic device 1000 includes a first housing 100, a second housing 200, a first folding mechanism 400, a speaker 500, a first magnetic attracting member 700, and a second magnetic attracting member 800. The first magnetic attracting member 700 is mounted on the first housing 100, and the speaker 500 and the second magnetic attracting member 800 are mounted on the second housing 200. The second magnetic attracting member 800 and the speaker 500 are stacked in a thickness direction of the electronic device 1000. The first folding mechanism 400 is connected between the first housing 100 and the second housing 200, and the first housing 100 and the second housing 200 are unfolded or folded relative to each other by using the first folding mechanism 400. When the electronic device 1000 is in a folded state, the first magnetic attracting member 700 and the second magnetic attracting member 800 are disposed opposite to each other.

In some implementations, when the speaker 500 does not need to cooperate with the first sensor 600 to implement opening and closing detection, the speaker 500 may be of a speaker type without a magnetic member, such as an ultrasonic speaker 500.

It may be understood that embodiments of this application and features in embodiments may be combined with each other when there is no conflict, and any combination of features in different embodiments also falls within the protection scope of this application. In other words, the plurality of embodiments described above may be further randomly combined based on an actual requirement.

It may be understood that all the foregoing accompanying drawings are example figures of this application, and do not represent actual sizes of products. In addition, a size proportional relationship between components in the accompanying drawings is not intended to limit an actual product in this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An electronic device (1000), comprising a first housing (100), a second housing (200), a first folding mechanism (400), a speaker (500), and a first sensor (600), wherein the first folding mechanism (400) is connected to the first housing (100) and the second housing (200), the first housing (100) and the second housing (200) are unfolded or folded relative to each other by using the first folding mechanism (400), the first sensor (600) is mounted on the first housing (100), and the speaker (500) is mounted on the second housing (200); and
the speaker (500) comprises a magnetic member (510), and the first sensor (600) is configured to detect magnetic field strength of the magnetic member (510), to detect an opening angle of the second housing (200) relative to the first housing (100) based on the magnetic field strength.

2. The electronic device (1000) according to claim 1, wherein when the electronic device (1000) is in a closed state, the first sensor (600) and the magnetic member (510) are disposed opposite to each other.

3. The electronic device (1000) according to claim 1 or 2, wherein the speaker (500) comprises a frame (541), a diaphragm (544), a voice coil (543), and a magnetic circuit system (542), and the frame (541) and the diaphragm (544) are arranged in a thickness direction of the electronic device (1000);
a peripheral edge (5441) of the diaphragm (544) is fastened to the frame (541), the magnetic circuit system (542) is fastened to the frame (541), one end of the voice coil (543) is fastened to a side that is of the diaphragm (544) and that faces the magnetic circuit system (542), and the other end is located in a magnetic gap (5423) of the magnetic circuit system (542); and
the magnetic circuit system (542) comprises the magnetic member (510).

4. The electronic device (1000) according to claim 3, wherein the magnetic circuit system (542) comprises a central magnet (5421) and an edge magnet (5422), the edge magnet (5422) surrounds the central magnet (5421) and is spaced apart from the central magnet (5421), and the central magnet (5421) and the edge magnet (5422) enclose the magnetic gap (5423); and
the central magnet (5421) is the magnetic member (510).

5. The electronic device (1000) according to claim 3, wherein when the electronic device (1000) is in the closed state, the magnetic circuit system (542) is located on a side that is of the diaphragm (544) and that is close to the first housing (100).

6. The electronic device (1000) according to any one of claims 3 to 5, wherein the speaker (500) further comprises a magnetic conductive sheet (546), the magnetic conductive sheet (546) is fastened to the frame (541), and the magnetic conductive sheet (546) is disposed opposite to the magnetic circuit system (542); and
when the electronic device (1000) is in the closed state, the first sensor (600) and the magnetic conductive sheet (546) are disposed opposite to each other.

7. The electronic device (1000) according to any one of claims 1 to 6, wherein the electronic device (1000) further comprises a first magnetic attracting member (700) and a second magnetic attracting member (800), the first magnetic attracting member (700) is mounted on the first housing (100), and the second magnetic attracting member (800) is mounted on the second housing (200); and
when the electronic device (1000) is in the closed state, the first magnetic attracting member (700) and the second magnetic attracting member (800) are disposed opposite to each other.

8. The electronic device (1000) according to claim 7, wherein the second magnetic attracting member (800) and the speaker (500) are stacked in the thickness direction of the electronic device (1000).

9. The electronic device (1000) according to claim 8, wherein when the electronic device (1000) is in the closed state, the second magnetic attracting member (800) is fastened to a side that is of the speaker (500) and that is close to the first housing (100).

10. The electronic device (1000) according to any one of claims 7 to 9, wherein the electronic device (1000) further comprises a magnetic isolation sheet (950), and the magnetic isolation sheet (950) is fastened to the speaker (500) and is located between the second magnetic attracting member (800) and the magnetic member (510).

11. The electronic device (1000) according to any one of claims 7 to 10, wherein a housing of the speaker (500) is provided with a mounting slot (521), an opening of the mounting slot (521) is located on an outer surface of the housing (570) of the speaker (500), and the second magnetic attracting member (800) is fastened in the mounting slot (521).

12. The electronic device (1000) according to claim 11, wherein the housing (570) of the speaker (500) comprises a first sub-housing (520) and a second sub-housing (530), the first sub-housing (520) and the second sub-housing (530) are arranged in the thickness direction of the electronic device (1000), the first sub-housing (520) is connected to the second sub-housing (530), to enclose accommodating space (560), and at least a part of a core (540) of the speaker (500) is located in the accommodating space (560); and
the opening of the mounting slot (521) is located on a surface that is of the first sub-housing (520) and that faces away from the accommodating space (560).

13. The electronic device (1000) according to any one of claims 1 to 12, wherein the electronic device (1000) further comprises a third housing (910) and a second folding mechanism (920), the second folding mechanism (920) is connected to the second housing (200) and the third housing (910), and the second housing (200) and the third housing (910) are unfolded or folded relative to each other by using the second folding mechanism (920); and
the electronic device (1000) further comprises a second sensor (930), the second sensor (930) is mounted on the third housing (910), and the second sensor (930) is configured to detect magnetic field strength of the magnetic member (510), to detect an opening angle of the third housing (910) relative to the second housing (200) based on the magnetic field strength.

14. The electronic device (1000) according to any one of claims 7 to 12, wherein the electronic device (1000) further comprises a third housing (910) and a second folding mechanism (920), the second folding mechanism (920) is connected to the second housing (200) and the third housing (910), and the second housing (200) and the third housing (910) are unfolded or folded relative to each other by using the second folding mechanism (920); and
the electronic device (1000) further comprises a third magnetic attracting member (940), the third magnetic attracting member (940) is mounted on the third housing (910), and when the electronic device (1000) is in the closed state, the first magnetic attracting member (700) and the second magnetic attracting member (800) are disposed opposite to each other.
